# FASCICULE DE BREVET EUROPEEN

(11) **EP 1 729 986 B1**
(45) Date de publication et mention de la délivrance du brevet: **15.04.2009**
(21) Numéro de dépôt: 05717547.3
(22) Date de dépôt: 03.02.2005
(51) Int. Cl.: B60H 1/32

(54) **SYSTEME DE TRAITEMENT D'AIR ASSOCIANT CLIMATISATION ET PURIFICATION POUR CABINE D'ENGIN**
LUFTBEHANDLUNGSSYSTEM ZUR KONDITIONIERUNG UND REINIGUNG VON LUFT IN EINER FAHRZEUGKABINE
AIR-TREATING SYSTEM FOR CONDITIONING AND CLEANING AIR IN A VEHICLE CABIN

(30) Priorité: 09.02.2004 FR 0401225
(43) Date de publication de la demande: 13.12.2006
(73) Titulaire: AEREL, 72310 Besse-sur-Braye (FR)
(72) Inventeur: LYON, Roland, F-41800 Couture sur le Loir (FR)
(74) Mandataire: Larcher, Dominique
(86) Numéro de dépôt international: PCT/FR2005/000235
(87) Numéro de publication internationale: WO 2005/082654

(56) Documents cités:
- CH-A- 578 719
- US-A- 4 360 368
- US-A- 5 695 117

## Description

L'invention concerne le domaine des dispositifs de traitement d'air associés à des cabines. Plus précisément, l'invention concerne un climatiseur filtrant destiné à équiper la cabine d'un engin.

On désignera par la suite indifféremment le dispositif objet du présent brevet par « système de traitement d'air » ou par « climatiseur ».

On entend par engin l'ensemble des véhicules comprenant les engins agricoles, les engins de chantier, industriels, ou autres.

Traditionnellement, les climatiseurs à évaporation d'eau comportent une chambre d'évaporation annulaire, des moyens d'aspiration de l'air extérieur et des moyens de mouillage ou d'humidification dans la chambre. Ces moyens d'humidification sont généralement constitués par un disque en rotation ou par des injecteurs qui pulvérisent de l'eau dans la chambre, produisant des gouttelettes dont les dimensions peuvent varier. On obtient ainsi une fine pluie ou un brouillard (par la suite, dans la description, on utilisera indifféremment le terme de « brouillard » ou de « pluie » ou d' « eau pulvérisée »).

Le principe de ce type de climatiseur consiste à obtenir un phénomène d'évaporation, ce qui s'accompagne d'un rafraîchissement de l'air qui est destiné à être pulsé dans la cabine.

US 4,360,368 divulgue un climatiseur à évaporation selon le préambule de la revendication 1.

Un autre type de climatiseur à évaporation d'eau est décrit par le brevet EP0027760 déposé au même nom que la présente demande.

Selon la technique décrite, le climatiseur comprend une chambre d'évaporation dans laquelle débouche une chambre de distribution de l'air pulsé par un turbo-ventilateur. A l'extrémité de la chambre opposée à l'entrée d'air est placé un média séparateur de gouttelettes au travers duquel l'air passe pour parvenir à la cabine.

Une telle solution a permis de proposer des climatiseurs plus compacts tout en assurant un rafraîchissement satisfaisant de l'air.

Toutefois, le traitement de l'air avec de tels climatiseurs ne s'étend pas à la purification de l'air.

Or, dans certaines applications de l'invention, l'engin est placé dans une atmosphère hostile et l'air prélevé par le climatiseur peut être chargé en poussières, en aérosols, en vapeurs ou gaz divers...

C'est le cas par exemple des tracteurs et des engins agricoles lors des traitements phytosanitaires pulvérisés sur les cultures, ou des engins qui travaillent en carrières.

Il est donc souhaitable que l'air soufflé dans la cabine d'un engin puisse non seulement être climatisé mais en plus purifié, quand l'air en question est prélevé à l'extérieur de la cabine. Il est de plus nécessaire d'assurer le contrôle de la qualité de l'air respiré, c'est-à-dire de l'atmosphère intérieure de l'habitacle.

Traditionnellement, ce double problème (climatisation + purification) est abordé en traitement de volume, par l'association d'une cabine étanche avec un climatiseur frigorifique et des filtres sur son entrée d'air. L'inconvénient de ce système est que la protection respiratoire de l'opérateur est mise en défaut d'une part dès que la cabine n'est pas ou n'est plus étanche, et d'autre part par le recyclage interne de l'air mis en jeu par ce type de climatisation.

C'est notamment un objectif de l'invention de proposer un climatiseur par évaporation d'eau qui permet d'évoluer dans certaines atmosphères hostiles et qui délivre dans la cabine un air frais et sain.

L'invention a également pour objectif de fournir un tel climatiseur qui puisse fonctionner efficacement indifféremment lorsque la cabine est fermée ou lorsqu'elle est ouverte.

L'invention a aussi pour objectif de fournir un tel climatiseur qui conserve les avantages des climatiseurs évaporatifs antérieurs, notamment en ce qui concerne la gestion des eaux condensées à l'intérieur du climatiseur.

L'invention a encore pour objectif de fournir un tel climatiseur qui soit simple de conception et facile à mettre en oeuvre et à installer sur, ou à intégrer à la cabine d'un engin.

Ces objectifs, ainsi que d'autres qui apparaîtront par la suite, sont atteints grâce à l'invention qui a pour objet un climatiseur par évaporation d'eau pour cabines d'engins ou similaires, du type comprenant une chambre d'évaporation dans laquelle sont prévus des moyens de formation d'un brouillard, de l'air étant soufflé dans ladite chambre d'évaporation en vue d'être dirigé vers ladite cabine par l'intermédiaire d'une sortie d'air en traversant au moins un filtre humide, comprenant des moyens déflecteurs permettant de faire converger ledit air soufflé et ledit brouillard vers des moyens de ruissellement prévus au voisinage dudit filtre humide de telle sorte que des gouttelettes d'eau formées à partir du brouillard soient dirigées vers la surface dudit filtre tournée vers l'intérieur de ladite chambre d'évaporation et ruissellent sur cette surface.

Ainsi, grâce à l'invention, les fonctions de climatisation et de purification d'air sont réalisées simultanément par un seul dispositif. En effet, l'air rafraîchi au contact du brouillard d'eau impacte le filtre humide qui fait donc également office de filtre à choc et à coalescence, l'air étant ainsi débarrassé de ses impuretés, telles que les aérosols liquides ou solides.

Ces fonctions sont assurées de façon fiable et durable par la mise en oeuvre des moyens de ruissellement selon l'invention, ces moyens permettant le nettoyage de la surface du filtre grâce au ruissellement engendré.

De plus, le mouillage du filtre est rendu quasiment indépendant de l'inclinaison et des vibrations de l'ensemble, ce qui garantit des performances que ne permettrait pas d'obtenir un mouillage par gouttière ou par simple gravité.

On note que l'invention propose une technique selon laquelle la climatisation et la purification de l'air sont exercées par un même ensemble fonctionnel, ce qui constitue un changement notable par rapport à l'art antérieur.

En effet, les climatisations conventionnelles n'assurent pas en elles-mêmes la fonction de purification. Aussi, un dispositif de filtration de l'air leur est le plus souvent associé. En pratique, on constate que la purification peut être l'objet de défaillances, au point éventuellement de présenter des risques sanitaires (dans le cas par exemple du relargage d'un filtre au charbon actif), ou peut-être tout simplement absent de l'installation. La fonction purification est mise en défaut par le recyclage de l'air en interne dès lors que la qualité de ce flux n'est pas maîtrisée.

En revanche, l'air qui est pulsé dans la cabine à l'aide du climatiseur objet du présent brevet est ici systématiquement à la fois rafraîchi et purifié.

Par ailleurs, grâce au principe de la climatisation évaporative, on peut fonctionner en cycle ouvert (c'est-à-dire sans recyclage de l'air), ce qui permet une pressurisation maximale de la cabine. Ainsi, on évite toute entrée directe d'air extérieur dans la cabine (l'air pulsé dans la cabine provenant intégralement du système de traitement d'air). De plus, on évite de devoir rendre la cabine étanche comme c'est le plus souvent le cas avec les dispositifs de l'art antérieur.

En d'autres termes, on fonctionne avec un air purifié provenant exclusivement du climatiseur, ceci sans aucune reprise d'air en provenance de la cabine.

Selon une solution préférée, ledit filtre humide est réalisé en un matériau hydrophile.

Un filtre ainsi constitué remplit simultanément plusieurs fonctions : celle de media humidificateur, celle de filtre à choc et à coalescence et celle de filtre humide.

Selon une solution avantageuse, lesdits moyens de ruissellement comprennent au moins une lèvre d'impact desdites gouttelettes s'étendant dans la partie supérieure dudit filtre humide dans un plan sensiblement confondu avec le plan de ladite surface dudit filtre tournée vers l'intérieur de ladite chambre.

Une telle architecture interne du climatiseur s'avère aisée à mettre en oeuvre et peu coûteuse à réaliser.

Préférentiellement, ladite lèvre est formée par un pli réalisé dans une plaque, dite plaque décrocheuse, fixée sous un couvercle de fermeture de ladite chambre d'évaporation.

On obtient une solution simple de conception, dont le montage peut être réalisé aisément et rapidement.

Dans ce cas, ladite plaque décrocheuse présente avantageusement un relief ou un profil conçu pour répartir l'eau régulièrement sur ladite lèvre.

Le ruissellement est ainsi optimisé, ce qui assure un lavage homogène de la face du filtre tournée vers l'intérieur de la chambre d'évaporation.

Avantageusement, le dispositif comprend une plaque déflectrice s'étendant dans le prolongement d'une boîte de distribution d'air soufflé.

On assure ainsi une bonne diffusion de l'air de façon à lui faire impacter les moyens de ruissellement, et plus particulièrement la face interne de la plaque fixée sous le couvercle.

Dans ce cas, ladite plaque déflectrice présente avantageusement des perforations et/ou une découpe de son bord supérieur.

De cette façon, on maîtrise :
- la répartition transversale du flux ;
- les gradiants de vitesse de l'air ;
- la répartition du mouillage du filtre (tel que mentionné précédemment).

Selon un mode de réalisation particulier, lesdits moyens de formation d'un brouillard comprennent au moins un injecteur positionné par rapport auxdits moyens déflecteurs de façon que ledit ou lesdits injecteurs expulsent l'eau selon une direction qui converge, au niveau desdits moyens de ruissellement, avec le flux d'air en sortie desdits moyens déflecteurs.

Le cône de projection de brouillard est ainsi dirigé de façon optimisée pour converger avec le flux d'air vers la face interne de la plaque décrocheuse.

Avantageusement, ladite chambre comprend au moins deux points d'épuisement de l'eau condensée couplés à des moyens de soutirage.

On obtient ainsi un épuisement actif de l'eau condensée, qui peut par exemple être réalisé à l'aide d'une pompe (ou de plusieurs) associées à des moyens de filtrage de l'eau.

Le volume d'eau mort est ainsi minimisé. De plus, on assure de cette façon un épuisement quasi-total et permanent de l'eau condensée.

Selon une solution préférée, ladite chambre présente un fond pourvu de moyens de garnissage comprenant l'un au moins des moyens appartenant au groupe suivant :
- revêtement d'un matériau comprenant une pluralité de tubes ou d'alvéoles communiquantes entre elles, accolés les uns aux autres ;
- réglette présentant des moyens de passage de l'eau.

Un tel agencement permet de travailler dans quasiment toutes les conditions d'inclinaison, de vibrations et de durée d'utilisation.

En effet, les volumes d'eau condensée sont rendus « prisonniers » du garnissage prévu dans le fond de la chambre, ce qui permet de supprimer ou à tout le moins de limiter les effets de vagues lors des changements brutaux d'inclinaison.

L'eau condensée est alors libérée progressivement par l'arrivage dans un espace ménagé entre le garnissage et le fond de la chambre d'évaporation.

Selon une première variante, un matelas d'un matériau cellulaire souple est interposé entre ledit revêtement et le fond de ladite chambre.

Selon une deuxième variante, la réglette présente l'un au moins des moyens appartenant au groupe suivant :
- orifice de passage d'eau ;
- espace ménagé par rapport au fond et/ou aux parois de ladite chambre ;
- lèvre supérieure prolongeant ladite réglette.

Dans l'un ou l'autre cas (ou les deux associés), on contrôle la vitesse de transfert des volumes d'eau morts, notamment lors des changements brutaux d'inclinaison.

En outre, on évite des transferts d'eau trop rapides qui risqueraient de saturer momentanément le système d'épuisement.

Avantageusement, lesdits moyens de soutirage sont reliés à un réservoir d'eau et en ce qu'une vanne permet de passer entre au moins deux configurations :
- une configuration de recyclage selon laquelle l'eau récupérée à l'aide desdits moyens de soutirage est redirigée vers ledit réservoir ;
- une configuration d'évacuation selon laquelle l'eau récupérée à l'aide desdits moyens de soutirage est évacuée en eau perdue.

L'opérateur peut ainsi choisir son mode de fonctionnement, soit en ayant recours à un volume d'eau propre (ce qui peut s'avérer utile dans le cas d'une utilisation dans un environnement particulièrement hostile), soit en recyclant l'eau consommée.

Selon un mode de réalisation particulier, ce dispositif comprend des moyens de mouillage intégrés dans ledit filtre humide.

Dans ce cas, lesdits moyens de mouillage comprennent un circuit réalisé en un matériau poreux.

L'invention concerne également un engin dont la cabine est équipée d'un climatiseur par évaporation d'eau, du type comprenant une chambre d'évaporation dans laquelle sont prévus des moyens de formation d'un brouillard, de l'air étant soufflé dans ladite chambre d'évaporation, en vue d'être dirigé vers ladite cabine par l'intermédiaire d'une sortie d'air en traversant au moins un filtre humide, comprenant des moyens déflecteurs permettant de faire converger ledit air soufflé et ledit brouillard vers des moyens de ruissellement prévus au voisinage dudit filtre humide de telle sorte que des gouttelettes d'eau formées à partir du brouillard soient dirigées vers la surface dudit filtre tournée vers l'intérieur de ladite chambre d'évaporation et ruissellent sur cette surface.

Selon une solution avantageuse, ledit engin et/ou ledit climatiseur comprend des moyens de diffusion de l'air issu dudit climatiseur permettant d'orienter au moins un flux d'air dans ladite cabine directement vers au moins un poste d'opérateur.

Ceci est permis par le climatiseur à évaporation d'eau selon l'invention, dont les caractéristiques climatiques respectent les impératifs physiologiques de confort (température et hygrométrie) concernant le visage et le corps de l'opérateur.

Ceci s'oppose aux systèmes de climatisation classiques qui délivrent un air dont la température en sortie du diffuseur est trop basse pour autoriser une diffusion directe. Il est alors nécessaire de diriger le flux d'air vers les parois de l'habitacle et non vers l'occupant.

Selon une solution préférée, ledit engin et/ou ledit climatiseur comprend des moyens d'asservissement du débit d'air issu dudit climatiseur à la pressurisation de ladite cabine, prévus de telle sorte que le débit d'air varie de façon inverse aux variations de ladite pressurisation.

Ainsi, lorsque la cabine est ouverte, le débit d'air en provenance du climatiseur peut être maximum et présente alors une vitesse qui permet d'atteindre directement l'opérateur à la manière d'un rideau d'air ou d'un effet de « zoning ».

Selon une autre caractéristique avantageuse, lesdits moyens d'asservissement agissent également sur lesdits moyens de diffusion de façon que l'air soit orienté vers l'opérateur lorsque la pressurisation de ladite cabine diminue, et orienté dans une autre direction lorsque ladite pressurisation augmente.

L'invention concerne aussi une cabine destinée à être montée sur un engin équipé d'un climatiseur par évaporation d'eau, du type comprenant une chambre d'évaporation dans laquelle sont prévus des moyens de formation d'un brouillard, de l'air étant soufflé dans ladite chambre d'évaporation en vue d'être dirigé vers ladite cabine par l'intermédiaire d'une sortie d'air en traversant au moins un filtre humide, caractérisé en ce qu'il comprend des moyens déflecteurs permettant de faire converger ledit air soufflé et ledit brouillard vers des moyens de ruissellement prévus au voisinage dudit filtre humide de telle sorte que des gouttelettes d'eau formées à partir du brouillard soient dirigées vers la surface dudit filtre tournée vers l'intérieur de ladite chambre d'évaporation et ruissellent sur cette surface.

D'autres caractéristiques et avantages de l'invention apparaîtront plus clairement à la lecture de la description suivante d'un mode de réalisation préférentiel de l'invention et de plusieurs de ses variantes de réalisation, donnés à titre d'exemples illustratifs et non limitatifs, et des dessins annexés parmi lesquels :
- les figures 1 et 2 sont des vues en coupe respectivement de côté et de dessus d'un climatiseur selon l'invention ;
- la figure 3 est une vue en coupe de côté d'une variante de réalisation d'un climatiseur selon l'invention ;
- la figure 4 est une vue de côté d'une réglette destinée à freiner les transferts d'eau condensée dans une climatiseur selon l'invention ;
- la figure 5 est une vue d'un garnissage de fond destiné à équiper un climatiseur selon l'invention ;
- la figure 6 est une vue de face d'une plaque déflectrice destinée à équiper un climatiseur selon l'invention ;
- les figures 7 à 9 sont des vues d'un mode de réalisation particulier d'un filtre humide destiné à équiper un climatiseur selon l'invention ;
- la figure 10 est une vue d'une variante d'un filtre humide illustré par les figures 7 à 9 ;
- la figure 11 illustre schématiquement un circuit de retour d'eau condensée au réservoir d'eau d'un climatiseur selon l'invention ;
- la figure 12 est une vue schématique d'une cabine équipée d'un climatiseur selon l'invention, illustrant les flux d'air dans la cabine.

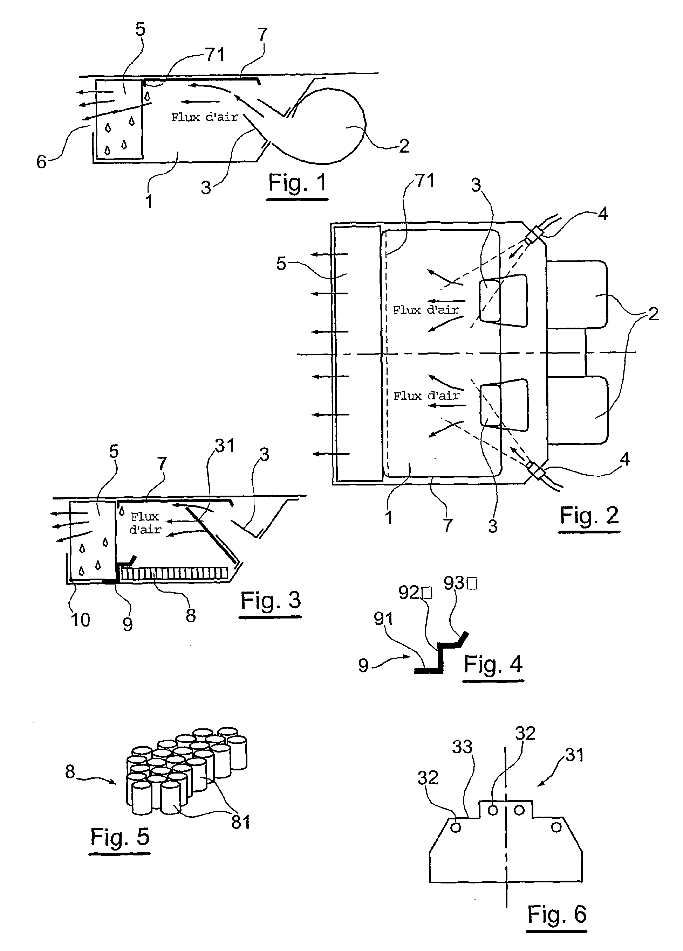

En référence à la figure 1, un climatiseur à évaporation d'eau selon l'invention comprend :
- une chambre d'évaporation 1 et de lavage d'air ;
- un turbo ventilateur 2 permettant de pulser de l'air dans la chambre d'évaporation par l'intermédiaire d'une boîte de distribution 3 ;
- des injecteurs 4, constituant des moyens de formation d'un brouillard dans la chambre d'évaporation 1 ;
- un filtre humide 5 placé devant la sortie d'air 6 du climatiseur, par laquelle l'air rafraîchi et purifié est dirigé dans la cabine d'un engin.

Selon le présent mode de réalisation de l'invention, l'air soufflé dans la chambre 1 et le brouillard convergent vers une plaque décrocheuse 7 formant moyens de ruissellement, cette plaque présentant une lèvre 71 au voisinage du filtre humide 5 de façon que des gouttelettes formées à partir du brouillard soient conduites vers la surface du filtre 5 tournée vers l'intérieur de la chambre de ruissellement sur cette surface.

Tel que cela apparaît, cette lèvre 71 s'étend dans un plan sensiblement confondu avec le plan de la surface du filtre 5 tournée vers l'intérieur de la chambre, en étant attenante à cette surface.

La lèvre 71 est constituée par un pli formé dans la plaque décrocheuse, cette dernière étant fixée sous le couvercle 73 du climatiseur.

On note que les moyens de ruissellement qui viennent d'être décrits pourraient être formés directement dans la paroi du couvercle selon un autre mode de réalisation envisageable.

En outre, la plaque décrocheuse 7 présente un relief (non représenté), par exemple des rainures, permettant de répartir l'eau sur la surface de la plaque, puis de la lèvre et par conséquent du filtre 5.

Selon le mode de réalisation illustré par la figure 3, une plaque déflectrice 31 est rapportée sous la boîte de distribution 3 de façon à prolonger cette dernière.

Tel que cela apparaît sur la figure 6, cette plaque déflectrice présente une découpe 33 et des orifices 32 en vue de maîtriser la répartition transversale et les vitesses du flux d'air.

De plus, le fond de la chambre d'évaporation est pourvu d'un garnissage 8 constitué de tubes 81 accolés les uns aux autres tel qu'illustré par la figure 5.

Préférentiellement, on intercale entre le fond de la chambre 1 et la base du garnissage 8, un matelas qui peut être constitué par un matériau à cellules ouvertes (non représenté) permettant de contrôler le laminage de l'eau entre le fond et le garnissage.

A la base du filtre humide 5, on prévoit également une réglette 9 profilée, faisant barrage à un transfert d'eau condensée trop rapide vers les deux points d'épuisement 10 ménagés à la base de la chambre, dans les coins de celle-ci au voisinage desquels est localisé le filtre 5.

Des moyens de soutirage sont associés aux points d'épuisement 10. On note que ces points d'épuisement peuvent être implantés au niveau du fond de la chambre (et pas nécessairement en dessous de ce fond).

La réglette 9, telle qu'illustrée par la figure 4, permet de freiner les transferts d'eau condensée au niveau du garnissage grâce à un calibrage approprié de l'espace maintenu entre ses parois 91, 92 et les parois intérieures (fond et côtés) de la chambre d'évaporation, et grâce aux trous prévus dans la paroi 92 (non représentés) dont la disposition et les diamètres sont choisis pour contrôler la vitesse de transfert de l'eau lors d'un basculement.

De plus, la réglette 9 est munie d'une lèvre supérieure 93 destinée à faire barrage à un transfert trop rapide d'eau libre vers les points d'épuisement.

Le filtre humide 5 est ici réalisé en un matériau hydrophile.

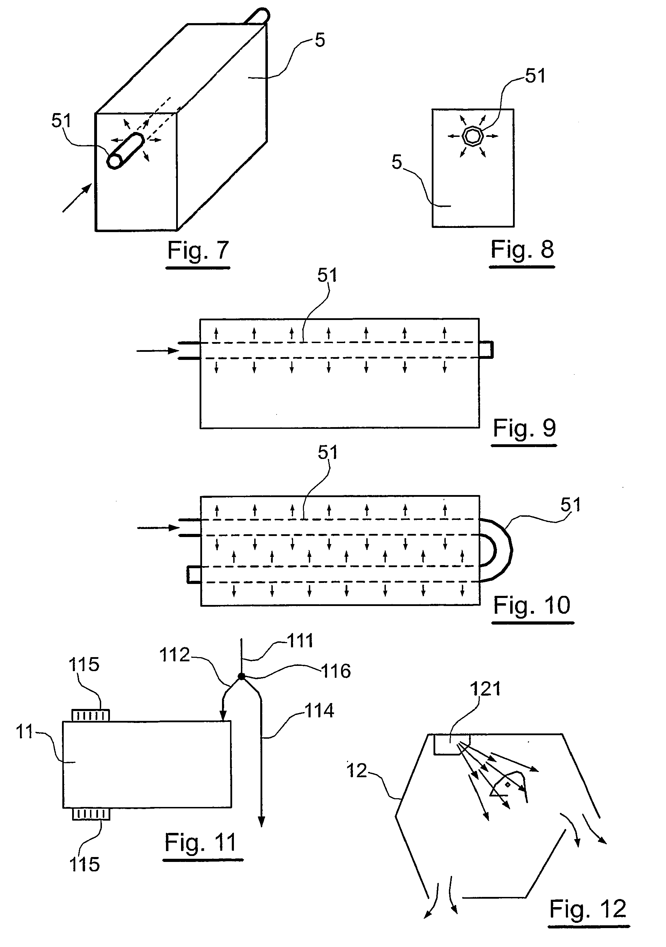

Selon une variante envisageable illustrée par les figures 7 à 9, le mouillage hydrophile est obtenu par une amenée interne de l'eau en son coeur : à cet effet, le filtre 5 est traversé par un circuit 51 composé d'une ou plusieurs longueurs de tuyau en matériau poreux (par exemple du tuyau caoutchouc poreux tel qu'utilisé en irrigation, ou du tube en céramique ou autre matériau poreux) ; ce tuyau est en contact avec le matériau hydrophile, à la manière des tubes de cuivre qu'incorporent les radiateurs thermiques, et qui sont en contact avec les ailettes.

Tel qu'illustré par la figure 9, le circuit 51 comporte une branche unique recevant de l'eau sous pression à l'une de ses extrémités et obturé à l'autre extrémité.

Selon une variante envisageable illustrée par la figure 10, le circuit 51 présente deux (ou plus) branches à l'intérieur du filtre 5.

L'eau est amenée sous pression à l'intérieur de ce circuit en tuyau poreux ; elle diffuse en perlant à travers sa paroi, et passe dans le média du filtre dont le caractère hydrophile du matériau assure la diffusion à l'ensemble de son volume.

En référence à la figure 11, les injecteurs présents dans la chambre d'évaporation sont reliés à un réservoir d'eau 11.

Les points d'épuisement de l'eau condensée sont reliés à une canalisation de drainage 111.

Une vanne 116 permet de choisir de mettre en communication la canalisation de drainage avec :
- soit une canalisation de recyclage 112 grâce à laquelle l'eau éventuellement filtrée préalablement est retournée au réservoir ;
- soit une canalisation d'évacuation 114 permettant d'évacuer l'eau en eau perdue, ce qui permet le fonctionnement en eau propre de façon permanente.

Le bouchon supérieur 115 permet le remplissage du réservoir. Le bouchon intérieur 113 (ou une vanne) permet la purge régulière du réservoir en fin de travail, de sorte de pouvoir évacuer en fin de journée le solde d'eau chargée qui a déjà travaillé, et de repartir le lendemain avec un réservoir d'eau neuve propre.

On note que les pompes du circuit d'injection et du circuit de purge (épuisement), peuvent être gérées en fonctionnement cyclé ou séquencé, permettant ainsi d'allonger leur durée de vie. Ceci est permis notamment grâce au caractère hydrophile du filtre 5, qui de ce fait, présente un phénomène d'hystérésis de mouillage entre deux cycles d'injection, et au dispositifs de gestion de l'eau condensée dans le climatiseur, qui offre un effet de tampon entre deux cycles de purge.

En référence à la figure 12, un climatiseur tel que celui qui vient d'être décrit est installé sur une cabine d'engin 12.

Selon le présent mode de réalisation, cette cabine 12 est non étanche, telle qu'illustrée schématiquement, et est pressurisée.

L'absence de recyclage et la mise en oeuvre d'un flux d'air 100% pris à l'extérieur permet une pressurisation intégrale à 100% du flux d'air mis en jeu. Ainsi l'habitacle bénéficie d'une pressurisation maximale qui rend la cabine aérauliquement étanche, y compris au niveau de ses ouvertures ponctuelles (ex : passages de commandes), ou de la détérioration de joints.

La protection contre les entrées de nuisances est ainsi assurée par isolation de l'habitacle.

La conception et la fabrication de la cabine peuvent être simplifiées puisque l'étanchéité est obtenue non par sa construction, mais par la pressurisation aéraulique.

Des moyens de diffusion 12 sont prévus pour permettre à l'opérateur de recevoir le flux d'air directement sur lui, et notamment sur la partie supérieure du corps et sur le visage.

C'est ainsi que la protection respiratoire de l'opérateur est alors assurée grâce à la qualité de l'air rafraîchi et purifié du flux dans lequel l'opérateur est directement situé.

Le fait que la cabine n'est pas fermée est suppléé par la disposition qui permet au conducteur de bénéficier directement d'un micro-climat local enveloppant, lequel détermine l'air qu'il respire.

Selon une autre caractéristique, le débit d'air de la turbine de ventilation est asservi à la pressurisation de la cabine : un manocontact ou un capteur de pression différentiel mesure la surpression relative de l'intérieur de l'habitacle par rapport à l'extérieur. Le débit de la turbine est asservi de telle manière qu'il varie automatiquement en fonction inverse de la pressurisation : débit maximum pour pressurisation minimum, et inversement.

Ainsi, lorsque la cabine est ouverte, la pressurisation est minimum et le débit d'air (qui est alors maximum) possède une célérité qui lui permet d'atteindre directement l'opérateur à la manière d'un rideau d'air ou d'un effet de zoning.

Selon encore une autre caractéristique, la direction de sortie du flux d'air est également asservie à la mesure de la pressurisation, de telle manière que le flux soit orienté directement sur l'opérateur lorsque la pressurisation est minimum (cabine ouverte), et hors de l'opérateur lorsque la pressurisation est maximum (cabine étanche).

On note que ces asservissements sont mis en oeuvre selon un fonctionnement par défaut : l'opérateur peut donc établir manuellement des réglages différents. Les réglages « asservis » sont automatiquement réinitialisés par l'arrêt de l'appareil.

On rappelle que l'invention n'est pas limitée au mode de réalisation qui vient d'être décrit. Le climatiseur pourra en effet bénéficier des perfectionnements consistant notamment à :
- activer le lavage d'air par l'intégration à l'eau d'adjuvants physiques et/ou chimiques : ces adjuvants peuvent être apportés sous forme concentrée solide ou liquide, à dissolution lente, dans le réservoir, où ils s'incorporent à l'eau au cours des remplissages successifs ; ces adjuvants concentrés à dissolution lente peuvent aussi être intégrés à l'intérieur des boîtiers des filtres à eau, lesquels doivent par ailleurs être régulièrement remplacés lors des opérations d'entretien (ainsi, l'utilisateur n'a aucunement à s'occuper du renouvellement de l'adjuvant) ;
- associer un traitement de l'eau par exemple par l'intégration d'un échangeur en cuivre (propriétés fongicides, algicides...), et/ou à l'aide de lampe(s) ou de tube(s) rayonnants intégré(s) dans le climatiseur et/ou dans le réservoir.

## Revendications

1. Climatiseur par évaporation d'eau pour cabines d'engins ou similaires, du type comprenant une chambre d'évaporation (1) dans laquelle sont prévus des moyens de formation (4) d'un brouillard, de l'air étant soufflé dans ladite chambre d'évaporation (1) en vue d'être dirigé vers ladite cabine par l'intermédiaire d'une sortie d'air (6) en traversant au moins un filtre humide (5), de telle sorte que des gouttelettes d'eau formées à partir du brouillard soient dirigées vers la surface dudit filtre (5) tournée vers l'intérieur de ladite chambre d'évaporation (1) et ruissellent sur cette surface,
**caractérisé en ce qu'**il comprend des moyens déflecteurs (3), (31) permettant de faire converger ledit air soufflé et ledit brouillard vers des moyens de ruissellement (7) prévus au voisinage dudit filtre humide (5).

2. Climatiseur selon la revendication 1, **caractérisé en ce que** ledit filtre humide (5) est réalisé en un matériau hydrophile.

3. Climatiseur selon l'une des revendications 1 et 2, **caractérisé en ce que** lesdits moyens de ruissellement comprennent au moins une lèvre d'impact (71) desdites gouttelettes s'étendant dans la partie supérieure dudit filtre humide (5) dans un plan sensiblement confondu avec le plan de ladite surface dudit filtre tournée vers l'intérieur de ladite chambre.

4. Climatiseur selon la revendication 3, **caractérisé en ce que** ladite lèvre (71) est formée par un pli réalisé dans une plaque (7), dite plaque décrocheuse, fixée sous un couvercle de fermeture de ladite chambre d'évaporation (1).

5. Climatiseur selon la revendication 4, **caractérisé en ce que** ladite plaque décrocheuse (7) présente un relief ou un profil conçu pour répartir l'eau régulièrement sur ladite lèvre.

6. Climatiseur selon l'une quelconque des revendications 1 à 5, **caractérisé en ce qu'**il comprend une plaque déflectrice (31) s'étendant dans le prolongement d'une boîte de distribution (3) d'air soufflé.

7. Climatiseur selon la revendication 6, **caractérisé en ce que** ladite plaque déflectrice (31) présente des perforations (32) et/ou une découpe (33) de son bord supérieur.

8. Climatiseur selon l'une des revendications 6 et 7, **caractérisé en ce que** lesdits moyens de formation (4) d'un brouillard comprennent au moins un injecteur positionné par rapport auxdits moyens déflecteurs (3), (31) de façon que ledit ou lesdits injecteurs expulsent l'eau selon une direction qui converge, au niveau desdits moyens de ruissellement, avec le flux d'air en sortie desdits moyens déflecteurs.

9. Climatiseur selon l'une quelconque des revendications 1 à 8, **caractérisé en ce que** ladite chambre (1) comprend au moins deux points d'épuisement (10) de l'eau condensée couplés à des moyens de soutirage.

10. Climatiseur selon l'une quelconque des revendications 1 à 9, **caractérisé en ce que** ladite chambre présente un fond pourvu de moyens de garnissage comprenant l'un au moins des moyens appartenant au groupe suivant :
- revêtement d'un matériau (8) comprenant une pluralité de tubes accolés les uns aux autres, ou d'alvéoles communiquantes ;
- réglette (9) présentant des moyens de passage de l'eau.

11. Climatiseur selon la revendication 10, **caractérisé en ce qu'**un matelas d'un matériau cellulaire souple est interposé entre ledit revêtement (8) et le fond de ladite chambre (1).

12. Climatiseur selon la revendication 10, **caractérisé en ce que** la réglette (5) présente l'un au moins des moyens appartenant au groupe suivant :
- orifice de passage d'eau ;
- espace ménagé par rapport au fond et/ou aux parois de ladite chambre ;
- lèvre supérieure (93) prolongeant ladite réglette.

13. Climatiseur selon l'une quelconque des revendications 9 à 12, **caractérisé en ce que** lesdits moyens de soutirage sont reliés à un réservoir (11) d'eau et **en ce qu'**une vanne (116) permet de passer entre au moins deux configurations :
- une configuration de recyclage selon laquelle l'eau récupérée à l'aide desdits moyens de soutirage est redirigée vers ledit réservoir (11) ;
- une configuration d'évacuation selon laquelle l'eau récupérée à l'aide desdits moyens de soutirage est évacuée en eau perdue.

14. Climatiseur selon l'une quelconque des revendications 1 à 13, **caractérisé en ce qu'**il comprend des moyens de mouillage (51) intégrés dans ledit filtre humide (5).

15. Climatiseur selon la revendication 14, **caractérisé en ce que** lesdits moyens de mouillage (51) comprennent un circuit réalisé en un matériau poreux.

16. Engin dont la cabine est équipée d'un climatiseur par évaporation d'eau, du type comprenant une chambre d'évaporation (1) dans laquelle sont prévus des moyens de formation (4) d'un brouillard, de l'air étant soufflé dans ladite chambre d'évaporation (1) en vue d'être dirigé vers ladite cabine par l'intermédiaire d'une sortie d'air (6) en traversant au moins un filtre humide (5), de telle sorte que des gouttelettes d'eau formées à partir du brouillard soient dirigées vers la surface dudit filtre (5) tournée vers l'intérieur de ladite chambre d'évaporation (1) et ruissellent sur cette surface,
**caractérisé en ce qu'**il comprend des moyens déflecteurs (3), (31) permettant de faire converger ledit air soufflé et ledit brouillard vers des moyens de ruissellement prévus au voisinage dudit filtre humide (5).

17. Engin selon la revendication 16, **caractérisé en ce que** ladite cabine (12) et/ou ledit climatiseur comprend des moyens de diffusion (121) de l'air issu dudit climatiseur permettant d'orienter au moins un flux d'air dans ladite cabine (12) directement vers au moins un poste d'opérateur.

18. Engin selon l'une des revendications 16 et 17, **caractérisé en ce que** ladite cabine et/ou ledit climatiseur comprend des moyens d'asservissement du débit d'air issu dudit climatiseur à une pressurisation de ladite cabine prévus de telle sorte que le débit d'air varie de façon inverse aux variations de ladite pressurisation.

19. Engin selon l'une quelconque des revendications 16 à 18, **caractérisé en ce que** lesdits moyens d'asservissement agissent également sur lesdits moyens de diffusion de façon que l'air soit orienté vers l'opérateur lorsque la pressurisation de ladite cabine diminue et orienté dans une autre direction lorsque ladite pressurisation augmente.

20. Cabine destinée à être montée sur un engin équipée d'un climatiseur par évaporation d'eau, du type comprenant une chambre d'évaporation (1) dans laquelle sont prévus des moyens de formation (4) d'un brouillard, de l'air étant soufflé dans ladite chambre d'évaporation (1) en vue d'être dirigé vers ladite cabine par l'intermédiaire d'une sortie d'air (6) en traversant au moins un filtre humide (5), de telle sorte que des gouttelettes d'eau formées à partir du brouillard soient dirigées vers la surface dudit filtre (5) tournée vers l'intérieur de ladite chambre d'évaporation (1) et ruissellent sur cette surface,
**caractérisée en ce qu'**elle comprend des moyens déflecteurs (3), (31) permettant de faire converger ledit air soufflé et ledit brouillard vers des moyens de ruissellement prévus au voisinage dudit filtre humide (5).

## Claims

1. Water-evaporation type air conditioner for vehicle cabs or the like, of the type comprising an evaporation chamber (1) in which water mist-forming means (4) are provided, air being blown into said evaporation chamber (1) in order to be directed towards said cab via an air outlet (6), passing through at least one wet filter (5), such that water droplets formed by the water mist are directed towards the surface of said filter (5), which is oriented towards the inside of said evaporation chamber (1), and run off said surface,
**characterised in that** it comprises deflector means (3), (31), making it possible to cause said blown air and said water mist to converge towards run-off means (7) provided in the vicinity of said wet filter (5).

2. Air conditioner according to Claim 1, **characterised in that** said wet filter (5) is made of a hydrophilic material.

3. Air conditioner according to one of Claims 1 and 2, **characterised in that** said run-off means comprise at least one impact lip (71) for said droplets, extending into the upper part of said wet filter (5) in a plane substantially coincident with the plane of said surface of said filter oriented towards the inside of said chamber.

4. Air conditioner according to Claim 3, **characterised in that** said lip (71) is formed by a fold made in a plate (7), known as a drop-out plate, fixed beneath a closing cover for said evaporation chamber (1).

5. Air conditioner according to Claim 4, **characterised in that** said drop-out plate (7) has a raised portion or a profile designed to distribute the water evenly over said lip.

6. Air conditioner according to any one of Claims 1 to 5, **characterised in that** it comprises a deflector plate (31) extending into the extension of a distribution box (3) for blown air.

7. Air conditioner according to Claim 6, **characterised in that** said deflector plate (31) has perforations (32) and/or a cut-out (33) in the upper edge thereof.

8. Air conditioner according to one of Claims 6 and 7, **characterised in that** said water mist-forming means (4) comprise at least one injector positioned relative to said deflector means (3), (31) so that said injector/injectors expels/expel the water in a direction which, in the region of said run-off means, converges with the airflow at the outlet of said deflector means.

9. Air conditioner according to any one of Claims 1 to 8, **characterised in that** said chamber (1) comprises at least two drainage points (10) for condensed water, coupled to the extraction means.

10. Air conditioner according to any one of Claims 1 to 9, **characterised in that** said chamber has a base provided with lining means comprising at least one of the means belonging to the following group:
- covering with a material (8) comprising a plurality of tubes joined to one another, or intercommunicating cells;
- profiling (9) having means for the passage of the water.

11. Air conditioner according to Claim 10, **characterised in that** a pad of a flexible cellular material is interposed between said covering (8) and the base of said chamber (1).

12. Air conditioner according to Claim 10, **characterised in that** the profiling (5) has at least one of the means belonging to the following group:
- orifice for the passage of water;
- space formed relative to the base and/or to the walls of said chamber;
- upper lip (93) extending said profiling.

13. Air conditioner according to any one of Claims 9 to 12, **characterised in that** said extraction means are connected to a water tank (11) and **in that** a valve (116) makes it possible to switch between at least two configurations:
- a recycling configuration according to which the water collected by means of said extraction means is redirected to said tank (11);
- a discharge configuration according to which the water collected by means of said extraction means is discharged as waste water.

14. Air conditioner according to any one of Claims 1 to 13, **characterised in that** it comprises wetting means (51) incorporated in said wet filter (5).

15. Air conditioner according to Claim 14, **characterised in that** said wetting means (51) comprise a circuit made of a porous material.

16. Vehicle of which the cab is provided with a water-evaporation type air conditioner, of the type comprising an evaporation chamber (1) in which water mist-forming means (4) are provided, air being blown into said evaporation chamber (1) in order to be directed towards said cab via an air outlet (6), passing through at least one wet filter (5), such that water droplets formed by the water mist are directed towards the surface of said filter (5), which is oriented towards the inside of said evaporation chamber (1), and run off said surface,
**characterised in that** it comprises deflector means (3), (31), making it possible to cause said blown air and said water mist to converge towards run-off means provided in the vicinity of said wet filter (5).

17. Vehicle according to Claim 16, **characterised in that** said cab (12) and/or said air conditioner comprises diffusion means (121) for the air coming from said air conditioner, making it possible to orientate at least one airflow into said cab (12) directly towards at least one operator position.

18. Vehicle according to one of Claims 16 and 17, **characterised in that** said cab and/or said air conditioner comprises means for automatically controlling the airflow coming from said air conditioner for pressurising said cab, which means are provided so that the airflow varies inversely relative to variations in said pressurisation.

19. Vehicle according to any one of Claims 16 to 18, **characterised in that** said automatic control means also act on said diffusion means so that the air is oriented towards the operator when the pressurisation of said cab reduces and oriented in a different direction when said pressurisation increases.

20. Cab designed to be mounted on a vehicle provided with a water-evaporation type air conditioner, of the type comprising an evaporation chamber (1) in which water mist-forming means (4) are provided, air being blown into said evaporation chamber (1) in order to be directed towards said cab via an air outlet (6), passing through at least one wet filter (5), such that water droplets formed by the water mist are directed towards the surface of said filter (5), which is oriented towards the inside of said evaporation chamber (1), and run off said surface,
**characterised in that** it comprises deflector means (3), (31), making it possible to cause said blown air and said water mist to converge towards run-off means provided in the vicinity of said wet filter (5).

## Patentansprüche

1. Klimaanlage durch Verdampfen von Wasser für das Fahrerhaus von Maschinen oder Ähnlichem, des Typs, der eine Verdampfungskammer (1) aufweist, in der Mittel zum Bilden (4) eines Nebels vorgesehen sind, wobei Luft in die Verdampfungskammer (1) geblasen wird, um zu dem Fahrerhaus über einen Luftauslass (6) geleitet zu werden, indem sie mindestens einen Nassfilter (5) durchquert, so dass Wassertröpfchen, die ausgehend von dem Nebel gebildet werden, zu der Oberfläche des Filters (5), die in das Innere der Verdampfungskammer (1) gerichtet ist, geleitet werden und auf dieser Fläche rieseln,
**dadurch gekennzeichnet, dass** sie Ablenkmittel (3), (31) aufweist, die es erlauben, die Blasluft und den Nebel zu Rieselmitteln (7), die in der Nähe des Nassfilters (5) vorgesehen sind, konvergieren zu lassen

2. Klimaanlage nach Anspruch 1, **dadurch gekennzeichnet, dass** der Nassfilter (5) aus einem Wasser anziehenden Werkstoff besteht.

3. Klimaanlage nach einem der Ansprüche 1 und 2, **dadurch gekennzeichnet, dass** die Rieselmittel mindestens eine Lippe (71) zum Aufprallen der Tröpfchen aufweisen, die sich in dem oberen Teil des Nassfilters (5) in einer Ebene erstreckt, die im Wesentlichen mit der Ebene der Fläche des Filters, die in das Innere der Kammer gerichtet ist, zusammenfällt.

4. Klimaanlage nach Anspruch 3, **dadurch gekennzeichnet, dass** die Lippe (71) aus einer Falte besteht, die in einer Platte (7), Abhängplatte genannt, die unter einem Schließdeckel der Verdampfungskammer (1) befestigt ist, hergestellt ist.

5. Klimaanlage nach Anspruch 4, **dadurch gekennzeichnet, dass** die Abhängplatte (7) ein Relief oder ein Profil aufweist, das konzipiert ist, um Wasser auf der Lippe regelmäßig zu verteilen.

6. Klimaanlage nach einem der Ansprüche 1 bis 5, **dadurch gekennzeichnet, dass** sie eine Ablenkplatte (31) aufweist, die sich in der Verlängerung eines Gehäuse (3) zum Verteilen von Blasluft erstreckt.

7. Klimaanlage nach Anspruch 6, **dadurch gekennzeichnet, dass** die Ablenkplatte (31) Lochungen (32) und/oder einen Ausschnitt (33) ihres oberen Rands aufweist.

8. Klimaanlage nach einem der Ansprüche 6 und 7, **dadurch gekennzeichnet, dass** die Mittel zum Bilden (4) eines Nebels mindestens einen Einspritzer aufweisen, der in Bezug auf Ablenkmittel (3), (31) derart positioniert ist, dass der oder die Einspritzer Wasser entlang einer Richtung, die auf dem Niveau der Rieselmittel mit dem Luftstrom am Auslass der Ablenkmittel konvergiert, auswerfen.

9. Klimaanlage nach einem der Ansprüche 1 bis 8, **dadurch gekennzeichnet, dass** die Verdampfungskammer (1) mindestens zwei Erschöpfungspunkte (10) des Kondenswassers, die mit Zapfmitteln verbunden sind, aufweist.

10. Klimaanlage nach einem der Ansprüche 1 bis 9, **dadurch gekennzeichnet, dass** die Kammer einen Boden aufweist, der mit Beschichtungsmitteln versehen ist, die mindestens eines der Mittel aufweisen, die zu der folgenden Gruppe gehören:
- Beschichtung mit einem Werkstoff (8), der mehrere Röhren aufweist, die neben einander liegen, oder kommunizierende Zellen;
- Leiste (9), die Mittel zum Durchgehen des Wassers aufweist.

11. Klimaanlage nach Anspruch 10, **dadurch gekennzeichnet, dass** eine Matratze aus einem geschmeidigen Zellwerkstoff zwischen die Beschichtung (8) und den Boden der Kammer (1) eingefügt ist.

12. Klimaanlage nach Anspruch 10, **dadurch gekennzeichnet, dass** die Leiste (5) mindestens eines der Mittel aufweist, die zu der folgenden Gruppe gehören:
- Wasserdurchgangsöffnung;
- Raum, der in Bezug zu dem Boden und/oder den Wänden der Kammer eingerichtet ist;
- obere Lippe (93), die die Leiste verlängert.

13. Klimaanlage nach einem der Ansprüche 9 bis 12, **dadurch gekennzeichnet, dass** die Zapfmittel mit einem Wassertank (11) verbunden sind, und dass ein Ventil (116) es erlaubt, zwischen mindestens zwei Konfigurationen hin- und herzugehen:
- eine Konfiguration zum Recyceln gemäß welcher das mit Hilfe der Zapfmittel aufgefangene Wasser zum dem Wassertank (11) zurück geleitet wird;
- eine Konfiguration zum Ableiten, gemäß welcher das mit Hilfe der Zapfmittel aufgefangene Wasser als Verlustwasser abgeleitet wird.

14. Klimaanlage nach einem der Ansprüche 1 bis 13, **dadurch gekennzeichnet, dass** sie Anfeuchtmittel (51) aufweist, die in den Nassfilter (5) eingebaut sind.

15. Klimaanlage nach Anspruch 14, **dadurch gekennzeichnet, dass** die Anfeuchtmittel (51) einen Kreislauf aufweisen, der aus einem porigen Werkstoff hergestellt ist.

16. Maschine, deren Fahrerhaus mit einer Klimaanlage durch Verdampfen von Wasser des Typs ausgestattet ist, der eine Verdampfungskammer (1) aufweist, in der Mittel zum Bilden (4) eines Nebels vorgesehen sind, wobei Luft in die Verdampfungskammer (1) geblasen wird, um zu dem Fahrerhaus über einen Luftauslass (6) gelenkt zu werden, indem sie mindestens einen Nassfilter (5) durchquert, so dass Wassertröpfchen, die ausgehend von dem Nebel gebildet werden, zu der Fläche des Filters (5), die zum Inneren der Verdampfungskammer (1) gerichtet ist, gelenkt werden und auf dieser Fläche rieseln,
**dadurch gekennzeichnet, dass** sie Ablenkmittel (3), (31) aufweist, die es erlauben, die Blasluft und den Nebel zu Rieselmitteln, die in der Nähe des Nassfilters (5) vorgesehen sind, konvergieren zu lassen.

17. Maschine nach Anspruch 16, **dadurch gekennzeichnet, dass** das Fahrerhaus (12) und/oder die Klimaanlage Mittel zum Verteilen (121) der Luft aufweist, die aus der Klimaanlage stammt, die es erlauben, mindestens einen Luftstrom in das Fahrerhaus (12) direkt zu mindestens einem Bedienerposten zu richten.

18. Maschine nach einem der Ansprüche 16 und 17, **dadurch gekennzeichnet, dass** das Fahrerhaus und/oder die Klimaanlage Mittel zum Steuern des Luftdurchsatzes, der aus der Klimaanlage stammt, zu einer Druckbeaufschlagung des Fahrerhauses aufweist, die derart vorgesehen ist, dass der Luftstrom umgekehrt zu den Variationen der Druckbeaufschlagung variiert.

19. Maschine nach einem der Ansprüche 16 bis 18, **dadurch gekennzeichnet, dass** die Steuermittel auch auf die Verteilungsmittel derart einwirken, dass die Luft zu dem Bediener gerichtet wird, wenn die Druckbeaufschlagung des Fahrerhauses abnimmt, und in eine andere Richtung gerichtet wird, wenn die Druckbeaufschlagung zunimmt.

20. Fahrerhaus, das dazu bestimmt ist, auf eine Maschine montiert zu werden, die mit einer Wasser verdampfenden Klimaanlage des Typs ausgestattet ist, der eine Verdampfungskammer (1) aufweist, in der Mittel zum Bilden (4) eines Nebels vorgesehen sind, wobei Luft in die Verdampfungskammer (1) geblasen wird, um zu dem Fahrerhaus über einen Luftauslass (6) gelenkt zu werden, indem sie mindestens ein Nassfilter (5) derart durchquert, dass Wassertröpfchen, die ausgehend von dem Nebel gebildet werden, zu der Fläche des Filters (5), die zum Inneren der Verdampfungskammer (1) gerichtet ist, gelenkt werden und auf dieser Fläche rieseln,
**dadurch gekennzeichnet, dass** sie Ablenkmittel (3), (31) aufweist, die es erlauben, die Blasluft und den Nebel zu Rieselmitteln, die in der Nähe des Nassfilters (5) vorgesehen sind, konvergieren zu lassen.
